# EUROPÄISCHE PATENTANMELDUNG

(11) **EP 1 726 200 A1**
(43) Veröffentlichungstag der Anmeldung: **29.11.2006**
(21) Anmeldenummer: 06009705.2
(22) Anmeldetag: 11.05.2006
(51) Int. Cl.: A01C 7/10

(54) **Verfahren zur Ermittlung der Qualität von landwirtschaftlichen Schüttgütern**

(30) Priorität: 27.05.2005 DE 102005024395
(71) Anmelder: Amazonen-Werke H. Dreyer GmbH & Co. KG, 49205 Hasbergen (DE)
(72) Erfinder: Scheufler, Bernd, Dr., 49205 Hasbergen (DE); Marquering, Johannes, Dr., 49176 Borgloh (DE)

(57) **Zusammenfassung**

Verfahren zur Ermittlung der Qualität von landwirtschaftlichen Schüttgütern, bei dem deren Bestandteile an einem Sensor vorbeigeführt und von diesem erfasst und die dabei ermittelten Werte mittels eines in einem Speichermedium eines Computers hinterlegten Auswerteprogramms ausgewertet werden. Um ein Verfahren zur Ermittlung der Qualität von landwirtschaftlichen Schüttgütern zu schaffen, mit dem eine Aussage über die Qualität des vorliegenden landwirtschaftlichen Schüttgutes zu machen ist, ist vorgesehen, dass aus den ermittelten Werten durch das Auswerteprogramm der Verschmutzungsgrad und/oder die Keimfähigkeit und/oder Kalibrierung des Schüttgutes ermittelbar ist.

Anzahl Anhängende Zeichnungen: [4]

## Beschreibung

Die Erfindung betrifft ein Verfahren zur Ermittlung der Qualität von landwirtschaftlichen Schüttgütern gemäß des Oberbegriffes des Anspruches 1.

Ein derartiges Verfahren ist beispielsweise in der DD 260 764 A1 beschrieben. Hierbei werden an einem CCD-Zeilensensor Saatgüter, Düngemittel, etc. vorbeigeführt um das Körnungsverhältnis von Schüttgütern kontinuierlich zu überwachen oder zu steuern.

Ein weiteres Verfahren ist in der DD 219 120 A1 beschrieben. Bei diesem Verfahren wird der Durchsatz bei Reinigungsmaschinen gesteuert bzw. geregelt, um die geforderte Qualität des gereinigten Gutes mit maximal möglichem Durchsatz ohne Zeitverzögerung und Risiko zu erreichen.

In der DE 33 12 586 C2 wird ein Verfahren und Vorrichtung zum Feststellen einer charakteristischen Eigenschaft beschrieben.

Durch die WO 95/24 823 ist ein Verfahren zur Ermittlung von Einstelldaten für einen Schleuderdüngerstreuer bekannt.

Durch die EP 01 66 136 A2 ist ein Verfahren und eine Vorrichtung zum optischen Zählen feiner Körperchen beschrieben. Bei diesem Verfahren werden die Gutpartikel, hier Saatkörner an einer optoelektrischen Messstrecke senkrecht zu parallelen Strahlen vorbei bewegt. Hierdurch kann die Anzahl der durch die Messstrecke bewegten Gutpartikel gezählt werden.

Der Erfindung liegt die Aufgabe zugrunde, ein Verfahren zur Ermittlung der Qualität von landwirtschaftlichen Schüttgütern zu schaffen, mit dem eine Aussage über die Qualität des vorliegenden landwirtschaftlichen Schüttgutes zu machen ist.

Diese Aufgabe wird erfindungsgemäß dadurch gelöst, dass aus den ermittelten Werten durch das Auswerteprogramm der Verschmutzungsgrad und/oder die Keimfähigkeit und/oder Kalibrierung des Schüttgutes ermittelbar ist. Infolge dieser Maßnahmen kann durch ein entsprechend hinterlegtes Auswerteprogramm der Verschmutzungsgrad, die Keimfähigkeit und/oder die Kalibrierung des Schüttgutes ermittelt werden. Hieraus können entsprechende Einstellparameter für die Verteilmaschine, mit dem die landwirtschaftlichen Schüttgüter ausgebracht werden, abgeleitet werden.

Die einzelnen Werte, die eine Aussage über die Qualität der landwirtschaftlichen Schüttgüter erlauben, lassen sich dadurch ermitteln, dass die ermittelten Werte das Korngrößenspektrum des Schüttgutes, die Kompaktheit der Bestandteile des Schüttgutes und die Anzahl der Körner/Bestandteile des Schüttgutes sind, und dass aus diesen Werten das Auswerteprogramm mittels hinterlegter Algorithmen die Reindichte des Schüttgutes berechnet wird. Die Reindichte ist ein wesentlicher Parameter, um eine Aussage über die Ausbringmenge zu treffen.

Um die gewünschte Ausbringmenge und auch den entsprechenden Feldaufgang zu erreichen, ist es wichtig, den Verschmutzungsgrad des Schüttgutes zu kennen. Dieser lässt sich dadurch nach dem erfindungsgemäßen Verfahren ermitteln, dass die ermittelten Werte das Korngrößenspektrum des Schüttgutes und die Kompaktheit der Bestandteile des Schüttgutes sind, und dass aus diesen Werten der Verschmutzungsgrad berechnet wird. Auch lässt diese Aussage bei dem Ausbringen von Düngemitteln mittels eines Schleuderdüngerstreuers einen Rückschluss auf die Querverteilungsgenauigkeit zu.

Um bei der Einstellung einer Sämaschine die Keimfähigkeit und dem Verschmutzungsgrad zu berücksichtigen, um den gewünschten Feldaufgang mit dem auszubringenden Saatgut zu erreichen, ist vorgesehen, dass die ermittelten Werte die Oberflächenbeschaffenheit der Bestandteile/Körner des Schüttgutes sind, und dass aus diesen Werten der Verschmutzungsgrad und/oder die Keimfähigkeit der Körner des Saatgutes berechnet werden.

Um den Verschmutzungsgrad des Schüttgutes mit den einzelnen Bestandteilen angeben zu können, ist vorgesehen, dass bei der Berechnung des Verschmutzungsgrades die Bestandteile des Schüttgutes in Körner, Spelzen, Hüllen, Staubanteil und Bruchkorn angegeben wird.

Um entsprechend der ermittelten Werte Einstellwerte für die Verteilmaschine angeben zu können, ist vorgesehen, dass aufgrund der ermittelten Werte eine Kalibrierung des Schüttgutes auf das zum Einsatz kommende Verteilorgan erfolgt, und dass die Einstellwerte für das Verteilorgan und/oder Dosierorgan der landwirtschaftlichen Maschinen nach Vorgaben, wie Arbeitsbreite, Ausbringmenge etc. entsprechend der ermittelten Werte angegeben werden.

Weitere Einzelheiten der Erfindung sind den übrigen Unteransprüchen, der Beispielsbeschreibung und den Zeichnungen zu entnehmen. Hierbei zeigen
- Fig. 1: eine Vorrichtung zur Ermittlung der Qualität von landwirtschaftlichen Schüttgütern in Prinzipdarstellung,

- Fig. 2: einen Sensor der Vorrichtung in Draufsicht und in Prinzipdarstellung,
- Fig. 3: eine mit dem Sensor ausgestattete Sämaschine in Prinzipdarstellung und
- Fig. 4: die Anordnung des Sensors in dem Verteilersystem der Sämaschine in vergrößerter Darstellung und in Prinzipdarstellung.

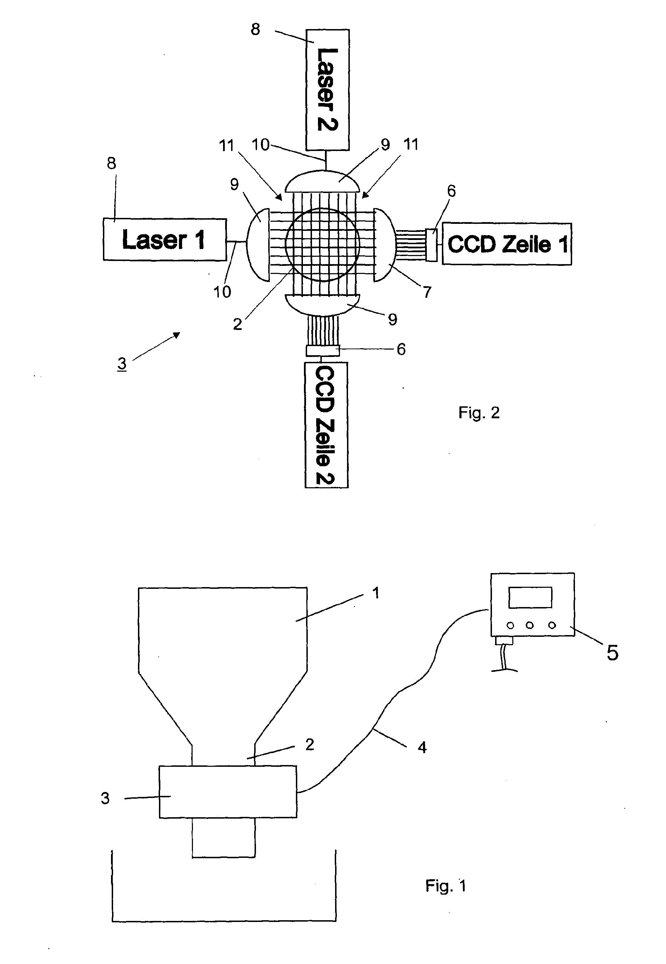

Die Vorrichtung zur Durchführung des Verfahrens gemäß Fig. 1 weist einen Einschütttrichter 1 und eine Auslaufschleuse 2 auf, in deren Bereich der Sensor 3 zur Ermittlung der Qualität von landwirtschaftlichen Schüttgütern angeordnet ist. Der Sensor ist über eine Datenübertragungsleitung 4 mit einem Computer 5 verbunden. In dem Speichermedium des Computers 5 ist ein Auswerteprogramm zur Ermittlung der Qualität von landwirtschaftlichen Schüttgütern aufgrund der an dem Sensor 3 vorbeigeführten Bestandteile der Schüttgüter hinterlegt.

Der Sensor 3 kann wie Fig. 2 zeigt, aus zwei um 90° zueinander versetzt angeordneten Laser-/CCD-Zeilen 6 bestehen. Jede CCD-Zeile 6 weist 256 Pixel auf. Jeder CCD-Zeile 6 ist eine optische Linse 7 zugeordnet. Jeder CCD-Zeile ist jeweils eine parallele Lichtstrahlen erzeugende Lasereinheit 8 mit einer optischen Linse 9 zugeordnet. Der Laserlichtstrahl 10 wird durch die Linse 9 auf die Breite der Auslaufschleuse 2 bzw. der Leitung in parallel zueinander verlaufenden Lichtstrahlen 11 aufgefächert, wie dies Fig. 2 zeigt. Über die der CCD-Zeile 6 zugeordneten Linse 7 werden diese parallelen Strahlen zusammengefasst und in parallelen Strahlen auf die CCD-Zeile 6 geleitet. Die CCD-Zeile 6 ist mit einer, wie bereits erwähnt, als Computer 5 ausgebildeten elektronischen Auswerteeinheit verbunden.

Die Anteile des landwirtschaftlichen Schüttgutes, beispielsweise Saatgut wird in den Trichter 1 geschüttet und passiert dann die von dem Sensor 3 gebildete Messstrecke. Die von dem Sensor 3 ermittelten Werte werden über die Datenleitung 4 an den Computer 5 weitergeleitet. Aus den ermittelten Werten errechnet das im Computer 5 hinterlegte Auswerteprogramm den Verschmutzungsgrad, die Keimfähigkeit und/oder die Kalibrierung des Schüttgutes.

Hierbei können durch das Auswerteprogramm aufgrund der ermittelten Werte das Korngrößenspektrum des Schüttgutes, die Kompaktheit der Bestandteile des Schüttgutes und die Anzahl der Körner bzw. Bestandteile des Schüttgutes ermittelt werden. Aus diesen Werten kann das Auswerteprogramm mittels hinterlegter Algorithmen die Reindichte des Schüttgutes berechnen.

Des Weiteren kann durch das hinterlegte Auswerteprogramm aus dem Korngrößenspektrum und der Kompaktheit der Bestandteil des Schüttgutes der Verschmutzungsgrad des Schüttgutes errechnet werden.

Des Weiteren kann von dem Auswerteprogramm die Oberflächenbeschaffenheit der Bestandteile bzw. Körner des Schüttgutes ermittelt werden. Aus diesen Werten kann der Verschmutzungsgrad und/oder die Keimfähigkeit der Körner des Saatgutes berechnet werden.

Des Weiteren kann durch das Auswerteprogramm bei der Berechnung des Verschmutzungsgrades die Bestandteile des Schüttgutes in Körner, Spelzen, Hüllen und Staubanteil und Bruchkorn angegeben werden. Die jeweilige Gausverteilung der einzelnen Messwerte kann ebenfalls von dem Auswerteprogramm berechnet werden. Des Weiteren kann bei dem Verfahren zur Ermittlung der Qualität von Schüttgütern durch das Auswerteprogramm aufgrund der ermittelten Werte eine Kalibrierung des Schüttgutes auf das zum Einsatz kommende Verteilorgan einer Verteilmaschine, beispielsweise Sämaschine, Düngerstreuer, etc. erfolgen. Hierbei können die Einstellwerte für das Verteilorgan und/oder Dosierorgan der landwirtschaftlichen Maschine nach Vorgaben, wie Arbeitsbreite, Ausbringmenge etc. Entsprechend ermittelten Werte angegeben werden.

Durch die vorbeschriebenen kombinierten Auswertungen von Korngrößenspektrum und Kompaktheit und evtl. weiterer Werte lässt sich ein Rückschluss auf den Verschmutzungsgrad ziehen. Die Reindichte lässt sich, wie erwähnt aus den Werten Korngrößenspektrum, Kompaktheit und Anzahl der Körner berechnen.

Zur Beurteilung der Qualität ist die Kalibrierung ebenfalls wichtig. Wenn sich das Korngrößenspektrum in einem engen Bereich bewegt, dann liegt eine hohe Qualität des Schüttgutes vor.

Das vorbeschriebene Verfahren zur Ermittlung der Qualität von landwirtschaftlichen Schüttgütern kann nicht nur wie vorbeschrieben, bei Saatgut angewendet werden, sondern auch bei gekörnten und granulierten Düngemitteln um hier ebenfalls Rückschlüsse auf die Einstellung der Maschine zu finden.

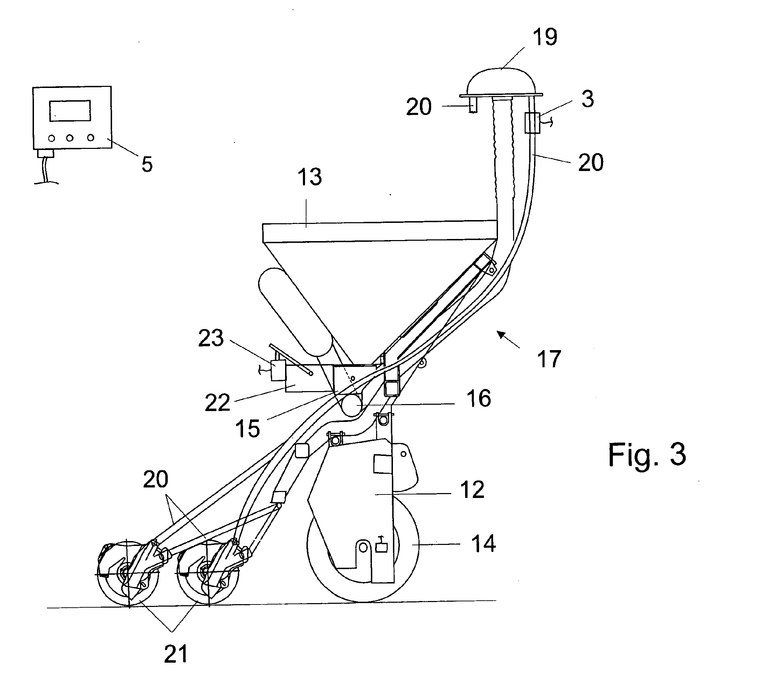

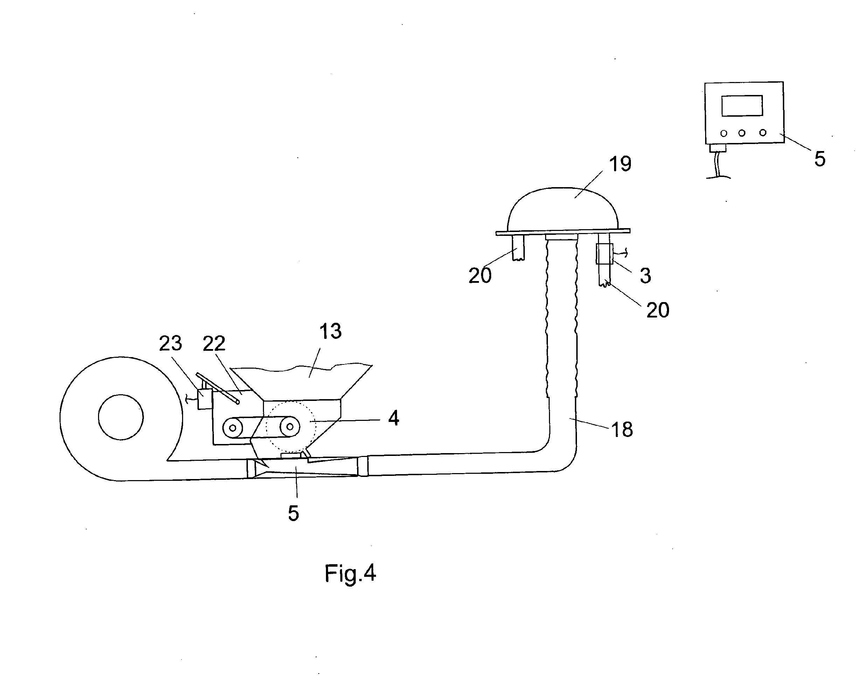

Die Verteilmaschine gemäß Fig. 3 und 4 ist als pneumatische Sämaschine ausgebildet. Sie weist einen Rahmen 12 und Vorratsbehälter 13 auf. Der Rahmen 12 stützt sich auf Laufrädern oder einer Bodenwalze 14 auf dem Boden ab. Dem Vorratsbehälter 13 ist ein Zentraldosierer 15 zugeordnet, der das sich im Vorratsbehälter 13 befindliche Saatgut über eine Schleuse 16 in eine zentrale Zuführleitung 17, die ein Steigrohr 18 aufweist, einleitet. Dieses Steigrohr 18 mündet an seinem oberen Ende in einem Verteilerkopf 19, über den das dosierte Saatgut auf die einzelnen sich an dem Verteilerkopf 19 anschließenden Saatleitungen 20 aufgeteilt wird. Die Saatleitungen 20 führen zu den am Rahmen 12 angelenkten Säschare 21. Dem Laufrad bzw. der Bodenwalze 14 ist eine Wegstreckenmesseinrichtung zugeordnet, die Messdaten werden an einen als Bordcomputer 5 ausgebildete elektronische Auswerteeinheit übermittelt. Der Dosierer 15 wird über einen Antriebsstrang und ein einstellbares Getriebe 22 von einer Kraftquelle 14 angetrieben. Das Getriebe 22 wird über einen Einstellmotor 23 eingestellt und von dem Bordcomputer 5 angesteuert. Es ist auch möglich den Dosierer 15 direkt von einem in seiner Drehzahl regelbaren Antriebsmotor anzutreiben.

In zumindest einer der von dem Verteilerkopf abgehenden von den Säscharen führenden Saatleitung 10 ist der als optoelektrische Messstrecke ausgebildete Sensor 3 angeordnet. Der Sensor 3 ist im Bereich eines transparenten Mediums der Saatleitung angeordnet. Der Sensor 3 entspricht dem gemäß Fig. 2 beschriebenen Sensor.

Bei dem Ausführungsbeispiel nach den Fig. 3 und 4 werden die von dem Sensor während der Ausbringarbeit ermittelten Daten von dem Bordcomputer 5 ermittelt und entsprechend des von dem Auswerteprogramm ermittelten Daten wird von dem Bordcomputer an die Einstelleinrichtung des Dosierorgans die Maschine entsprechend eingestellt.

## Patentansprüche

1. Verfahren zur Ermittlung der Qualität von landwirtschaftlichen Schüttgütern, bei dem deren Bestandteile an einem Sensor (3) vorbeigeführt und von diesem erfasst und die dabei ermittelten Werte mittels eines in einem Speichermedium eines Computers (5) hinterlegten Auswerteprogramms ausgewertet werden, **dadurch gekennzeichnet, dass** aus den ermittelten Werten durch das Auswerteprogramm der Verschmutzungsgrad und/oder die Keimfähigkeit und/oder Kalibrierung des Schüttgutes ermittelbar ist.

2. Verfahren nach Anspruch 1, **dadurch gekennzeichnet, dass** die ermittelten Werte das Korngrößenspektrum des Schüttgutes, die Kompaktheit der Bestandteile des Schüttgutes und die Anzahl der Körner/Bestandteile des Schüttgutes sind, und dass aus diesen Werten das Auswerteprogramm mittels hinterlegter Algorithmen die Reindichte des Schüttgutes berechnet wird.

3. Verfahren nach Anspruch 1, **dadurch gekennzeichnet, dass** die ermittelten Werte das Korngrößenspektrum des Schüttgutes und die Kompaktheit der Bestandteile des Schüttgutes sind, und dass aus diesen Werten der Verschmutzungsgrad berechnet wird.

4. Verfahren nach Anspruch 1, **dadurch gekennzeichnet, dass** die ermittelten Werte die Oberflächenbeschaffenheit der Bestandteile/Körner des Schüttgutes sind, und dass aus diesen Werten der Verschmutzungsgrad und/oder die Keimfähigkeit der Körner des Saatgutes berechnet werden.

5. Verfahren nach Anspruch 1, **dadurch gekennzeichnet, dass** bei der Berechnung des Verschmutzungsgrades die Bestandteile des Schüttgutes in Körner, Spelzen, Hüllen, Staubanteil und Bruchkorn angegeben wird.

6. Verfahren nach einem oder mehreren der vorstehenden Ansprüche, **dadurch gekennzeichnet, dass** die jeweilige Gausverteilung der einzelnen Messwerte berechnet wird.

7. Verfahren nach einem oder mehreren der vorstehenden Ansprüche, **dadurch gekennzeichnet, dass** aufgrund der ermittelten Werte eine Kalibrierung des Schüttgutes auf das zum Einsatz kommende Verteilorgan erfolgt, und dass die Einstellwerte für das Verteilorgan und/oder Dosierorgan der landwirtschaftlichen Maschinen nach Vorgaben, wie Arbeitsbreite, Ausbringmenge etc. entsprechend der ermittelten Werte angegeben werden.
